# EUROPÄISCHE PATENTANMELDUNG

(11) **EP 4 725 632 A1**
(43) Veröffentlichungstag der Anmeldung: **15.04.2026**
(21) Anmeldenummer: 24201396.9
(22) Anmeldetag: 19.09.2024
(51) Int. Cl.: B23K 9/10, B23K 9/32

(54) **VERFAHREN ZUR ZUORDNUNGSIDENTIFIZIERUNG VON GERÄTEN EINES SCHWEISSSYSTEMS UND SCHWEISSSYSTEM**

(71) Anmelder: EWM GmbH, 56271 Mündersbach (DE)
(72) Erfinder: Dörr, Fabian, 56479 Hellenhahn-Schellenberg (DE)
(74) Vertreter: Cohausz & Florack

(57) **Zusammenfassung**

Die Erfindung betrifft ein Verfahren (200, 204, 300, 304) zur Zuordnungsidentifizierung von Geräten (102a-d, 105) eines Schweißsystems (130a-d), ausgeführt auf mindestens einer Steuereinrichtung (120, 122, 132) eines Schweißsystems, bei dem für ein erstes Gerät (102a-d; 105) eines Schweißsystems (130a-d) ein Zuordnungsidentifizierungs-Steuerbefehl erhalten wird (220a, 320c) und bei dem, in Reaktion auf das Erhalten (220a, 320c) des Zuordnungsidentifizierungs-Steuerbefehls, über eine Nutzerschnittstelle (126; 124) eines dem ersten Gerät (102a-d; 105) zugeordneten zweiten Geräts (105; 102a-d) des Schweißsystems (130a-d) eine Nutzerausgabe (142; 140) zur Identifizierung des dem ersten Gerät (120a-d; 150) zugeordneten zweiten Geräts (105; 102a-d) bewirkt wird (224b, 324b). Die Erfindung betrifft weiter ein Schweißsystem (130a-d) mit einem ersten Gerät (102a-d; 105) und einem zweiten Gerät (105; 102a-d), wobei das Schweißsystem (130a-d) Mittel zur Durchführung des zuvor genannten Verfahrens aufweist.

## Beschreibung

Die vorliegende Erfindung betrifft ein Verfahren zur Zuordnungsidentifizierung von Geräten eines Schweißsystems. Die vorliegende Erfindung betrifft weiter ein Schweißsystem.

Schweißsysteme, insbesondere Lichtbogenschweißsysteme, umfassen in der Regel ein zentrales Schweißgerät, insbesondere die Schweißstromquelle, und ein oder mehrere über Leitungen und/oder drahtlose Verbindungen mit dem zentralen Schweißgerät verbundene Peripheriegeräte, beispielsweise ein Drahtvorschubgerät, einen Schweißbrenner, einen Fernsteller zur Fernsteuerung der Schweißstromquelle und/oder einen Schweißhelm. Wenn in einem Arbeitsbereich mehrere Schweißsysteme eingesetzt werden, ist die Zuordnung der Peripheriegeräte zu den jeweiligen zentralen Schweißgeräten nicht immer auf Anhieb zu erkennen. Dies kann selbst bei über Leitungen mit einem zentralen Schweißgerät verbundenen Peripheriegeräten der Fall sein, wenn die Leitungen zum Beispiel sehr lang sind und/oder die Leitungen mehrerer Schweißsysteme nah beieinander verlaufen.

Vor diesem Hintergrund liegt der vorliegenden Erfindung die Aufgabe zu Grunde, ein Schweißsystem und ein Verfahren zur Verfügung zu stellen, die einen verbesserten Bedienkomfort aufweisen.

Die zuvor genannte Aufgabe wird erfindungsgemäß gelöst durch ein Verfahren, ausgeführt mit ein oder mehreren Steuereinrichtungen eines Schweißsystems, bei dem für ein erstes Gerät eines Schweißsystems ein Zuordnungsidentifizierungs-Steuerbefehl erhalten wird und bei dem, in Reaktion auf das Erhalten des Zuordnungsidentifizierungs-Steuerbefehls, über eine Nutzerschnittstelle eines dem ersten Gerät zugeordneten zweiten Geräts des Schweißsystems eine Nutzerausgabe zur Identifizierung des dem ersten Gerät zugeordneten zweiten Geräts bewirkt wird.

Auf diese Weise wird einem Nutzer eines Schweißsystems eine Identifizierung eines dem ersten Gerät zugeordneten zweiten Geräts ermöglicht. Dadurch kann der Bediener beispielsweise ein einem zentralen Schweißgerät zugeordnetes Peripheriegerät identifizierten oder für ein Peripheriegerät das zugehörige zentrale Schweißgerät identifizieren, das dem bzw. dem das Peripheriegerät zugeordnet ist.

Das Verfahren dient zur Zuordnungsidentifizierung von Geräten eines Schweißsystems. Bei dem Schweißsystem handelt es sich vorzugsweise um ein Schweißsystem zum Lichtbogenschweißen, insbesondere mit abschmelzender Elektrode, zum Beispiel Metall-Schutzgas-Schweißen, oder mit nicht-abschmelzender Elektrode, zum Beispiel Wolfram-Inertgas-Schweißen.

Das Verfahren wird mit ein oder mehreren Steuereinrichtung eines Schweißsystems ausgeführt. Die ein oder mehreren Steuereinrichtungen können eine Steuereinrichtung des ersten Geräts und/oder eine Steuereinrichtung des zweiten Geräts umfassen. Weiterhin können die ein oder mehreren Steuereinrichtungen eine vom ersten und zweiten Gerät separate Steuereinrichtung umfassen, beispielsweise eine zentrale Steuereinrichtung, wie einen Server, mit der das erste und/oder das zweite Gerät über eine jeweilige oder gemeinsame Kommunikationsverbindung verbunden ist. Insbesondere können einzelne der ein oder mehreren Steuereinrichtungen einzelne Schritte des Verfahrens ausführen.

Bei dem Verfahren wird für ein erstes Gerät eines Schweißsystems ein Zuordnungsidentifizierungs-Steuerbefehl erhalten. Der Zuordnungsidentifizierungs-Steuerbefehl hat das Ziel, ein oder mehrere zweite Geräte zu identifizieren, die dem ersten Gerät zugeordnet sind. Bei dem ersten Gerät kann es sich insbesondere um ein zentrales Schweißgerät des Schweißsystems handeln, beispielsweise um eine Schweißstromquelle. Weiterhin kann es sich bei dem ersten Gerät auch um ein Peripheriegerät des Schweißsystems handeln, beispielsweise um einen Fernsteller.

Die ein oder mehreren zweiten Geräte können dem ersten Gerät durch ein Zuordnungsverfahren zugeordnet worden sein, das vor dem Erhalt des Zuordnungsidentifizierungs-Steuerbefehls durchgeführt worden ist. Bei dem Zuordnungsverfahren kann insbesondere auf dem ersten Gerät oder auf einer zentralen Steuereinrichtung und optional auf den ein oder mehreren zweiten Geräten eine Zuordnungsinformation über die Zuordnung des ersten Geräts zu den ein oder mehreren zweiten Geräten oder zu dem jeweiligen zweiten Gerät gespeichert worden sein. Der Erhalt des Zuordnungsidentifizierungs-Steuerbefehls ist vorzugsweise entkoppelt vom Zuordnungsverfahren.

Der Zuordnungsidentifizierungs-Steuerbefehl kann eine Zuordnungsinformation über die Zuordnung des ersten und eines zweiten Geräts zueinander enthalten. Auf diese Weise kann das zweite Gerät, auf dessen Nutzerschnittstelle die Nutzerausgabe zu bewirken ist, unmittelbar aus dem Zuordnungsidentifizierungs-Steuerbefehl ermittelt werden. Vorzugsweise wird das dem ersten Gerät zugeordnete zweite Gerät jedoch in Reaktion auf den Erhalt des Zuordnungsidentifizierungs-Steuerbefehls unter Verwendung einer vor Erhalt des Zuordnungsidentifizierungs-Steuerbefehls gespeicherten Zuordnungsinformation über die Zuordnung des ersten und zweiten Geräts zueinander, insbesondere einer bei Durchführung eines Zuordnungsverfahrens zur Zuordnung des ersten Geräts und eines zweiten Geräts zueinander gespeicherten Zuordnungsinformation, ermittelt. Die Zuordnungsinformation ist vorzugsweise auf dem erste Gerät und/oder auf einer zentralen Steuereinrichtung des Schweißsystems gespeichert. Weiterhin ist die Zuordnungsinformation vorzugsweise auf dem zweiten Gerät gespeichert.

Der Zuordnungsidentifizierungs-Steuerbefehl kann beispielsweise durch eine entsprechende Nutzereingabe an einer Nutzerschnittstelle des Schweißsystems erhalten werden, beispielsweise an einer Nutzerschnittstelle des ersten Geräts oder einer zentralen Steuereinrichtung.

Bei dem Verfahren wird in Reaktion auf das Erhalten des Zuordnungsidentifizierungs-Steuerbefehls eine Nutzerausgabe zur Identifizierung eines dem ersten Gerät zugeordneten zweiten Gerät bewirkt, und zwar über eine Nutzerschnittstelle des zweiten Geräts. Auf diese Weise kann der Bediener durch Erfassen der Nutzerausgabe an dem zweiten Gerät das betreffende zweite Gerät als ein dem ersten Gerät zugeordnetes Gerät erkennen.

Das Bewirken der Nutzerausgabe umfasst vorzugsweise ein Ermitteln der dem ersten Gerät zugeordneten ein oder mehreren zweiten Geräte, insbesondere auf Basis der Zuordnungsinformation über die Zuordnung des ersten und zweiten Geräts zueinander, die vorzugsweise auf dem ersten Gerät oder einer zentralen Steuereinrichtung gespeichert ist, insbesondere bei der vorigen Durchführung eines Zuordnungsverfahrens gespeichert wurde.

Das Bewirken der Nutzerausgabe umfasst weiter vorzugsweise, dass das zweite Gerät, insbesondere dessen Steuereinrichtung, einen Nutzerausgabe-Steuerbefehl erhält, beispielsweise von dem ersten Gerät oder von einer zentralen Steuereinrichtung wie einem Server, und dass das zweite Gerät, insbesondere dessen Steuereinrichtung, in Reaktion auf das Erhalten des Nutzerausgabe-Steuerbefehls die Nutzerausgabe über die Nutzerschnittstelle des zweiten Geräts bewirkt. Das zweite Gerät kann den Nutzerausgabe-Steuerbefehl insbesondere über eine Kommunikationsverbindung zwischen dem ersten und dem zweiten Gerät oder zwischen einem weiteren Gerät, beispielsweise einer zentralen Steuereinrichtung und dem zweiten Gerät, erhalten.

Bei der Nutzerausgabe, die über die Nutzerschnittstelle des zweiten Geräts bewirkt wird, kann es sich um eine vorgegebene Nutzerausgabe handeln. Die vorgegebene Nutzerausgabe kann beispielsweise in einem Speicher des zweiten Geräts hinterlegt sein. Weiterhin ist es denkbar, dass das zweite Gerät die Nutzerausgabe als Funktion eines erhaltenen Nutzerausgabe-Steuerbefehls oder als Funktion einer auf dem zweiten Gerät gespeicherten Zuordnungsinformation, insbesondere einer bei einem Zuordnungsverfahren gespeicherten Zuordnungsinformation, über die Zuordnung zwischen dem ersten und zweiten Gerät auswählt.

Die zuvor genannte Aufgabe wird erfindungsgemäß weiterhin gelöst durch ein Schweißsystem mit einem ersten Gerät und einem zweiten Gerät, wobei das Schweißsystem Mittel zur Durchführung des zuvor beschriebenen Verfahrens oder einer Ausführungsform davon aufweist. Insbesondere kann das Schweißsystem ein oder mehrere Steuereinrichtungen, beispielsweise eine Steuereinrichtung des ersten Geräts, eine Steuereinrichtung des zweiten Geräts und/oder eine zentrale Steuereinrichtung, aufweisen, die allein oder gemeinsam zur Durchführung des Verfahrens oder einer Ausführungsform davon eingerichtet sind. Die ein oder mehreren Steuereinrichtung können insbesondere ein oder mehrere Mikroprozessoren und ein oder mehrere Speicher mit Befehlen aufweisen, deren Ausführung auf den ein oder mehreren Mikroprozessoren die Durchführung des Verfahrens oder einer Ausführungsform davon bewirkt.

Entsprechend wird die zuvor genannte Aufgabe weiterhin insbesondere gelöst durch ein Schweißsystem mit einem ersten Gerät und mit einem zweiten Gerät, wobei ein oder mehrere Steuereinrichtungen vorgesehen sind, umfassend ein oder mehrere Mikroprozessoren und ein oder mehrere Speicher mit Befehlen, deren Ausführung auf den ein oder mehreren Mikroprozessoren die Durchführung des zuvor beschriebenen Verfahrens oder einer Ausführungsform davon bewirkt. Die ein oder mehreren Steuereinrichtungen können insbesondere eine Steuereinrichtung des ersten Geräts, des zweiten Geräts und/oder eine zentrale Steuereinrichtung umfassen.

Im Folgenden werden verschiedene Ausführungsformen des Verfahrens und der Schweißsysteme beschrieben, wobei die einzelnen Ausführungsformen jeweils unabhängig voneinander für das Verfahren und die Schweißsysteme gelten. Darüber hinaus können die einzelnen Ausführungsformen beliebig miteinander kombiniert werden.

Bei einer Ausführungsform sind das erste Gerät und das zweite Gerät zur Datenübermittlung, vorzugsweise Steuerbefehlsübermittlung, über eine Kommunikationsverbindung, vorzugsweise drahtlose Kommunikationsverbindung, einander zugeordnet. Die Zuordnung ist demnach vorzugsweise insbesondere derart, dass das erste Gerät und das zweite Gerät zur Datenübermittlung, insbesondere Steuerbefehlsübermittlung, vom ersten zum zweiten Gerät und/oder vom zweiten Gerät zum ersten Gerät eingerichtet sind.

Insbesondere können das erste und das zweite Gerät zur Steuerbefehlsübermittlung vom ersten zum zweiten Gerät oder vom zweiten zum ersten Gerät eingerichtet und vorzugsweise einander zugeordnet sein. Bei dem ersten oder zweiten Gerät kann es sich beispielsweise um einen Fernsteller handeln, mit dem Steuerbefehle an das jeweilige andere Gerät übermittelt werden können.

Weiterhin ist es denkbar, dass Schweißparameter und/oder andere Schweißdaten, beispielweise erfasste aktuelle Schweißdaten, bei der Datenübermittlung übermittelt werden. Bei dem ersten oder zweiten Gerät kann es sich beispielsweise um ein Peripheriegerät mit einer Nutzerschnittstelle, beispielsweise um einen Schweißhelm mit einer Anzeige im Sichtbereich des Nutzers, handeln, auf der dem Nutzer per Datenübermittelung übermittelte Schweißparameter und/oder andere Schweißdaten angezeigt werden können.

Die Kommunikationsverbindung besteht vorzugsweise bereits, wenn der Zuordnungsidentifizierungs-Steuerbefehl erhalten wird. Insbesondere kann bei dem Verfahren eine Kommunikationsverbindung zwischen dem ersten und dem zweiten Gerät etabliert werden, bevor der Zuordnungsidentifizierungs-Steuerbefehl erhalten wird.

Vorzugsweise umfasst das Verfahren, insbesondere vor dem Erhalten des Zuordnungsidentifizierungs-Steuerbefehls, ein Zuordnungsverfahren, bei dem das erste und das zweite Gerät einander zugeordnet werden. Das Zuordnungsverfahren kann insbesondere das Erhalten eines Zuordnungs-Steuerbefehls umfassen sowie ein Zuordnen des ersten und zweiten Geräts zueinander in Reaktion auf den Erhalt des Zuordnungs-Steuerbefehls. Der Zuordnungs-Steuerbefehl kann beispielsweise über eine entsprechende Nutzereingabe über eine Nutzerschnittstelle des ersten Geräts, des zweiten Geräts oder einer zentralen Steuereinrichtung erhalten werden.

Das Zuordnen des ersten und des zweiten Geräts zueinander umfasst vorzugsweise ein Erhalten einer Zuordnungsinformation über die Zuordnung des ersten und des zweiten Geräts zueinander und ein Speichern der Zuordnungsinformation, vorzugsweise auf dem ersten und dem zweiten Gerät.

Weiterhin kann das Verfahren eine Etablierung einer Kommunikationsverbindung zwischen dem ersten und zweiten Gerät umfassen, beispielsweise die Etablierung einer Punkt-zu-Punkt-Verbindung oder einer Mehrpunktverbindung, zum Beispiel durch Etablierung eines Zugangs des ersten und zweiten Geräts zu einem gemeinsamen Kommunikationsnetzwerk.

Das Zuordnen des ersten und des zweiten Geräts zueinander kann beispielsweise vor oder bei Etablierung der Kommunikationsverbindung zwischen dem ersten und zweiten Gerät erfolgen.

Bei der Kommunikationsverbindung zwischen dem ersten und dem zweiten Gerät kann es sich insbesondere um eine drahtlose Kommunikationsverbindung handeln. Unter einer drahtlosen Kommunikationsverbindung wird vorliegend eine Kommunikationsverbindung verstanden, die zumindest abschnittsweise kabellos ist, insbesondere mittels Funktechnik erfolgt.

Das Erhalten des Zuordnungsidentifizierungs-Steuerbefehls ist zeitlich vorzugsweise unabhängig von dem zuvor durchgeführten Zuordnungsverfahren. Insbesondere kann das Erhalten des Zuordnungsidentifizierungs-Steuerbefehls durch eine Nutzereingabe zu einem beliebigen Zeitpunkt nach der Durchführung des Zuordnungsverfahrens erfolgen.

Bei einer Ausführungsform ist die Kommunikationsverbindung eine Punkt-zu-Punkt-Kommunikationsverbindung. Beispielsweise kann die Kommunikationsverbindung eine Kommunikationsverbindung nach einem Bluetooth- oder NFC-Standard sein. Bei einer Punkt-zu-Punkt-Kommunikationsverbindung werden das erste und das zweite Gerät durch eine direkte Kommunikationsverbindung verbunden, an der keine weiteren Geräte als Endstellen der Kommunikationsverbindung beteiligt sind. Daher definiert eine Punkt-zu-Punkt Verbindung bereits eine Zuordnung des ersten und zweiten Geräts zueinander, so dass bereits das Bestehen bzw. die Etablierung einer solchen Punkt-zu-Punkt-Verbindung eine Zuordnung des ersten und zweiten Geräts zueinander darstellen kann. Vorzugsweise wird auf dem ersten und optional dem zweiten Gerät eine Zuordnungsinformation über die Zuordnung des ersten und zweiten Geräts zueinander gespeichert.

Bei der Kommunikationsverbindung kann es sich auch um eine Mehrpunktverbindung, beispielsweise um eine Bluetooth-Mesh-, LAN- oder WLAN-Verbindung, handeln. Bei einer Mehrpunktverbindung erhalten das erste und das zweite Gerät vorzugsweise eine jeweilige Zuordnungsinformation über die Zuordnung des ersten und zweiten Geräts zueinander, so dass auf jedem von dem ersten und dem zweiten Gerät die Information der Zuordnung zu dem jeweiligen anderen von dem ersten und zweiten Gerät gespeichert ist.

Bei einer Ausführungsform wird der Zuordnungsidentifizierungs-Steuerbefehl an dem ersten Gerät erhalten. Insbesondere kann der Zuordnungsidentifizierungs-Steuerbefehl über eine entsprechende Nutzereingabe an einer Nutzerschnittstelle des ersten Geräts erhalten werden. Bei der entsprechenden Nutzereingabe kann es sich zum Beispiel um eine vorgegebene Tastenkombination oder um die Auswahl eines Menüpunkts handeln. Auf diese Weise kann der Nutzer an einem Gerät selbst den Befehl geben, dem Gerät zugeordnete Geräte zu identifizieren. Dies ermöglicht eine besonders intuitive Bedienung und schnelles Auffinden von Geräten eines vom Nutzer bedienten Geräts.

Weiter kann das erste Gerät den Zuordnungsidentifizierungs-Steuerbefehl über eine Kommunikationsverbindung erhalten, beispielsweise von einer zentralen Steuereinrichtung des Schweißsystems. Auf diese Weise kann von einer zentralen Stelle ein Zuordnungs-Identifizierungsverfahren für das Schweißsystem ausgelöst werden.

Bei einer Ausführungsform umfasst das Bewirken der Nutzerausgabe über die Nutzerschnittstelle des zweiten Geräts in Reaktion auf das Erhalten des Zuordnungsidentifizierungs-Steuerbefehls:
- Übermitteln, eines Zuordnungsidentifizierungs-Fernsteuerbefehls vom ersten Gerät zum zweiten Gerät, vorzugsweise über die Kommunikationsverbindung, und
- Bewirken der Nutzerausgabe über die Nutzerschnittstelle des zweiten Geräts in Reaktion auf das Erhalten des Zuordnungsidentifizierungs-Fernsteuerbefehls, insbesondere am zweiten Gerät.

Auf diese Weise kann die Ausgabe der Nutzerausgabe über die Nutzerschnittstelle des zweiten Geräts durch das erste Gerät bewirkt werden, indem ein entsprechender Fernsteuerbefehl an das zweite Gerät übermittelt wird. Insbesondere kann das erste Gerät das dem ersten Gerät zugeordnete zweite Gerät anhand einer auf einem Speicher des ersten Geräts gespeicherten Zuordnungsinformation über die Zuordnung des ersten und zweiten Geräts zueinander identifizieren und den Zuordnungsidentifizierung-Steuerbefehl sodann an das identifizierte zweite Gerät übermitteln.

Bei einer Ausführungsform, insbesondere des Verfahrens, ist eines von dem ersten und zweiten Gerät zur Fernsteuerung des anderen von dem ersten und zweiten Gerät eingerichtet und dem anderen zu dessen Fernsteuerung zugeordnet. Bei einer entsprechenden Ausführungsform, insbesondere des Schweißsystems, ist eines von dem ersten und zweiten Gerät zur Fernsteuerung des anderen von dem ersten und zweiten Gerät eingerichtet ist. Insbesondere kann das erste Gerät ein Fernsteller sein, der zur Fernsteuerung des zweiten Geräts eingerichtet und diesem zum Zweck der Fernsteuerung zuordenbar oder zugeordnet ist. Auf diese Weise kann mit dem Verfahren identifiziert werden, welches Gerät dem Fernsteller zu dessen Fernsteuerung zugeordnet ist. Weiterhin ist es denkbar, dass das zweite Gerät ein Fernsteller ist, das zur Fernsteuerung des ersten Geräts eingerichtet und zu diesem Zweck dem ersten Gerät zuordenbar oder zugeordnet ist. Auf diese Weise kann mit dem Verfahren identifiziert werden, welcher Fernsteller einem Gerät zu dessen Fernsteuerung zugeordnet ist.

Der Fernsteller kann insbesondere dazu eingerichtet sein, das andere Gerät, insbesondere Schweißgerät, derart fernzusteuern, dass auf dem anderen Gerät eine Einstellung eines Schweißparameters oder eine Durchführung eines Schweißprozesses bewirkt wird. Auf diese Weise können mit dem Fernsteller wichtige Einstellungen am Schweißgerät, insbesondere der Schweißstromquelle, vorgenommen und/oder Schweißverfahren ferngesteuert werden.

Bei einer Ausführungsform wird, in Reaktion auf das Erhalten des Zuordnungsidentifizierungs-Steuerbefehls, eine Nutzerausgabe, vorzugsweise eine zu der über die Nutzerschnittstelle des zweiten Geräts bewirkten Nutzerausgabe korrespondierende Nutzerausgabe, über eine Nutzerschnittstelle des ersten Geräts bewirkt. Auf diese Weise kann die Zuordnung des ersten und zweiten Geräts durch den Nutzer einfacher identifiziert werden. Insbesondere kann der Nutzer auf diese Weise die Nutzerausgabe an der Nutzerschnittstelle des zweiten Geräts einfacher erkennen, wenn diese zu der Nutzerausgabe an der Nutzerschnittstelle des ersten Geräts korrespondiert. Weiterhin ist diese Ausführungsform vorteilhaft, wenn der Zuordnungsidentifizierungs-Steuerbefehl initial unabhängig vom ersten oder zweiten Gerät erhalten wird, beispielsweise über eine Nutzerschnittstelle einer zentralen Steuereinrichtung des Schweißsystems, wie eines Servers. Durch die korrespondierenden Nutzerausgaben können dann sowohl das erste als auch das zweite Gerät identifiziert werden.

Bei einer Ausführungsform umfassen die über die Nutzerschnittstelle des zweiten Geräts bewirkte Nutzerausgabe und die über die Nutzerschnittstelle des ersten Geräts bewirkte korrespondierende Nutzerausgabe Lichtsignale mit korrespondierenden Farben und/oder zeitlich und/oder räumlich korrespondierenden Leuchtmustern umfassen. Auf diese Weise kann der Nutzer die Zuordnung des ersten und zweiten Geräts einfach erkennen. Beispielsweise können die erste und die zweite Nutzerausgabe Lichtsignale der gleichen Farbe umfassen oder ein gleichzeitiges Blinken, beispielsweise durch abwechselndes hell- und dunkel-Schalten eines Bildschirms. Das gleichzeitige Blinken erfolgt besonders bevorzugt mit einer aneinander angepassten, insbesondere derselben, Blinkfrequenz.

Bei einer Ausführungsform wird, in Reaktion auf das Erhalten des Zuordnungsidentifizierungs-Steuerbefehls, für mehrere dem ersten Gerät zugeordnete zweite Geräte des Schweißsystems über eine jeweilige Nutzerschnittstelle des jeweiligen zweiten Geräts eine jeweilige Nutzerausgabe zur Identifizierung des dem ersten Gerät zugeordneten jeweiligen zweiten Geräts bewirkt. Auf diese Weise können mehrere einem ersten Gerät zugeordnete zweite Geräte identifiziert werden, beispielsweise mehrere einem zentralen Schweißgerät zugeordnete Peripheriegeräte.

Weitere Merkmale und Vorteile der Verfahren und der Schweißsystem ergeben sich aus der nachfolgenden Beschreibung von Ausführungsbeispielen, wobei auf die beigefügte Zeichnung Bezug genommen wird.

In der Zeichnung zeigen
- Fig. 1: Ausführungsbeispiele des Schweißsystems,
- Fig. 2: ein Ausführungsbeispiel des Verfahrens und
- Fig. 3: ein weiteres Ausführungsbeispiel des Verfahrens.

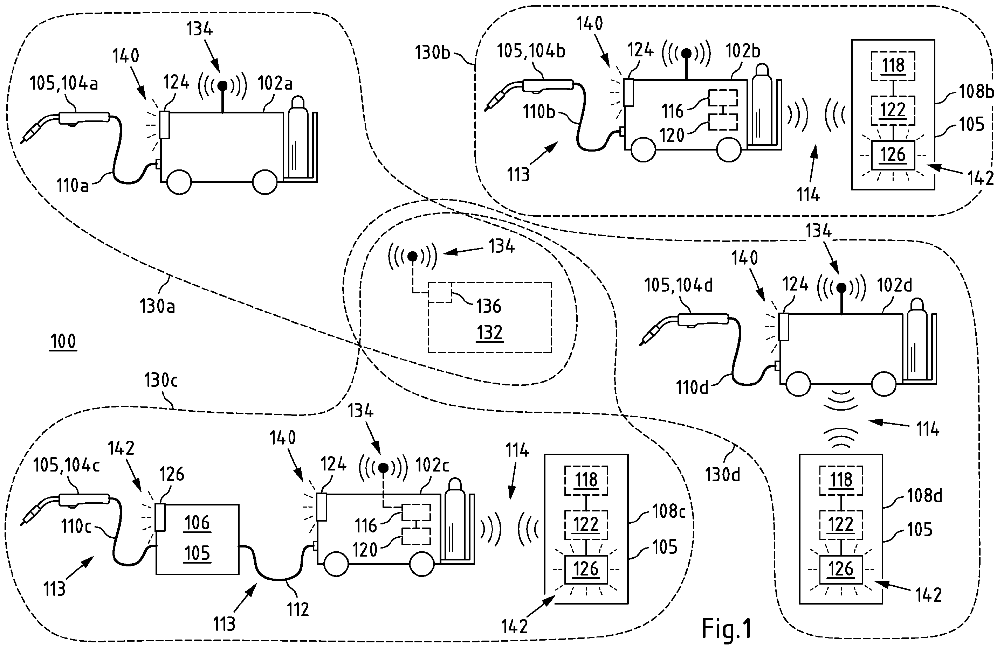

Fig. 1 zeigt Ausführungsbeispiele des Schweißsystems in schematischer Darstellung.

In einem Arbeitsbereich 100, beispielsweise einer Fabrikhalle oder Werft, werden häufig parallel mehrere Schweißgeräte 102a-d betrieben, von denen in Fig. 1 vier gezeigt sind. Mit den Schweißgeräten 102a-d können über kabelgebundene und/oder kabellose Verbindungen jeweils ein oder mehrere Peripheriegeräte 105 verbunden sein, von denen in Fig. 1 einige gezeigt sind. Bei den Peripheriegeräten 105 kann es sich insbesondere um Schweißbrenner 104a-d, Drahtvorschubgeräte 106 und/oder Fernsteller 108b-d handeln. Weiterhin sind auch Schweißhelme oder andere Peripheriegeräte denkbar.

Die Schweißgeräte 102a-d weisen jeweils eine Steuereinrichtung 120 zu deren Steuerung auf. Weiterhin weisen auch ein oder mehrere der Peripheriegeräte 105 jeweilige Steuereinrichtungen 122 auf, insbesondere die Drahtvorschubgeräte 106 und die Fernsteller 108b-d und, je nach Typ, auch die Schweißbrenner 104a-d.

Die Schweißgeräte 102a-d weisen zudem eine jeweilige Nutzerschnittstelle 124 auf, die insbesondere Nutzerausgabeelemente, wie zum Beispiel einen Bildschirm, LEDs oder Lautsprecher, und/oder Nutzereingabeelemente, wie zum Beispiel Knöpfe oder einen Touchscreen, aufweisen. Weiterhin weisen auch ein oder mehrere der Peripheriegeräte 105 jeweilige Nutzerschnittstellen 126 auf, insbesondere die Drahtvorschubgeräte 106 und die Fernsteller 108b-d und, je nach Typ, auch die Schweißbrenner 104a-d.

Die Schweißbrenner 104a-d sind zum Beispiel mittels eines jeweiligen Schlauchpakets 110a-d, in dem ein oder mehrere Medien-, Strom- und ggf. Datenleitungen verlaufen, an die Schweißgeräte 102a, 102b und 102d bzw. an das Drahtvorschubgerät 106 angeschlossen, wobei das Drahtvorschubgerät 106 wiederum über ein Schlauchpaket 112 am Schweißgerät 102c angeschlossen ist. Durch in den Schlauchpaketen 110a-d bzw. 112 vorhandene Datenleitungen werden drahtgebundene Punkt-zu-Punkt-Kommunikationsverbindungen 113 zwischen den Schweißbrennern 104a-d bzw. dem Drahtvorschubgerät 106 und den jeweiligen Schweißgeräten 102a-d bereitgestellt. Anstelle einer gesonderten Datenleitung kann auch ein Kommunikationssignal auf die in den Schlauchpaketen 110a-d bzw. 112 verlaufenden Schweißstromleitungen aufmoduliert werden.

Die Fernsteller 108b-d sind im vorliegenden Beispiel über drahtlose Kommunikationsverbindungen 114 mit den jeweiligen Steuereinrichtungen 120 eines der Schweißgeräte 102a-d verbunden, beispielsweise über eine Punkt-zu-Punkt-Verbindung wie Bluetooth. Zu diesem Zweck weisen die Schweißgeräte 102a-d und die Fernsteller 108b-d jeweilige Kommunikationseinrichtungen 116, 118, beispielsweise Transceiver, auf, mit denen die drahtlosen Kommunikationsverbindungen 114 etabliert und betrieben werden können.

Ein Schweißgerät 102a-d und die jeweils zugehörigen Peripheriegeräte 105 bilden zusammen ein jeweiliges Schweißsystem 130a-d.

Die Fernsteller 108b-d dienen zur Fernsteuerung eines jeweiligen Schweißgeräts. Über die Kommunikationsverbindungen 114 können zu diesem Zweck beispielsweise in Reaktion auf eine entsprechende Nutzereingabe an der Nutzerschnittstelle 126 eines Fernstellers 108b-d Steuerbefehle zum jeweiligen zugeordneten Schweißgerät 102b-d übermittelt werden. Umgekehrt können über die Kommunikationsverbindungen 114 beispielsweise Schweißdaten vom jeweiligen zugeordneten Schweißgerät 102b-d an die Fernsteller 108b-d übermittelt werden, so dass diese über die Nutzerschnittstelle 126 ausgegeben, beispielsweise auf einem Bildschirm angezeigt, werden können.

Es kann eine zentrale Steuereinrichtung 132 vorgesehen sein, mit denen die Schweißgeräte - in Fig. 1 zum Beispiel die Schweißgeräte 102a, 102c und 102d - über eine drahtlose Kommunikationsverbindung 134, beispielsweise WLAN, oder alternativ über eine drahtgebundene Kommunikationsverbindung, beispielsweise LAN, verbunden sind. Insbesondere können die Kommunikationseinrichtungen 116 der Schweißgeräte 102a-d für eine drahtlose Kommunikationsverbindung 134 mit einer Kommunikationseinrichtung 136 an der zentralen Steuereinrichtung 132 eingerichtet sein. Bei der zentralen Steuereinrichtung 132 kann es sich zum Beispiel um einen Server handeln, auf dem ein Schweißmanagement-Programm läuft, mit dem zum Beispiel die Schweißgeräte 102a, 102c und 102d oder damit durchgeführte Schweißprozesse überwacht, protokolliert, konfiguriert und/oder gesteuert werden können. Die zentrale Steuereinrichtung 132 kann entsprechend als Teil der jeweiligen Schweißsysteme 130a, 130c und 130d angesehen werden.

Für einen Nutzer stellt sich in Arbeitsbereichen mit mehreren Schweißsystemen 130a-d wie im Arbeitsbereich 100 das Problem, dass er nicht auf Anhieb erkennen kann, welchem Schweißgerät 102a-d ein bestimmtes Peripheriegerät 105 zugeordnet ist bzw. welche Peripheriegeräte 105 einem bestimmten Schweißgerät 102a-d zugeordnet sind. Dies ist insbesondere der Fall, wenn das betreffende Peripheriegerät 105 über eine drahtlose Kommunikationsverbindung mit dem zugeordneten Schweißgerät 102a-d verbunden ist. Jedoch können derartige Zuordnungsschwierigkeiten auch bei drahtgebundenen Kommunikationsverbindungen auftreten, beispielsweise zwischen Drahtvorschubgerät 106 und zugehörigem Schweißgerät 102c oder zwischen Schweißbrenner 104a-d und Schweißgerät 102a-d oder Drahtvorschubgerät 106, zum Beispiel wenn die Schlauchpakete 110a-d, 112 sehr lang sind, mehrere der Schlauchpakete 110a-d, 112 nah beieinander verlaufen oder die Schweißgeräte 102a-d nah beieinander stehen.

Um die Bedienung der Schweißsysteme 130a-d zu erleichtern, sind die Schweißsysteme 130a-d dazu eingerichtet, ein Zuordnungsidentifizierungs-Verfahren durchzuführen, damit der Nutzer eine Zuordnung eines oder mehrerer Peripheriegeräte 105 zu einem Schweißgerät 102a-c erkennen kann. Insbesondere können eine oder mehrere der Steuereinrichtungen des betreffenden Schweißsystems 130a-d, insbesondere eine oder mehrere der Steuereinrichtungen 120, 122 und 132, dazu eingerichtet sein, ein solches Zuordnungsidentifizierungs-Verfahren durchzuführen. Weiter können die Steuereinrichtungen des betreffenden Schweißsystems 130a-d, insbesondere eine oder mehrere der Steuereinrichtungen 120, 122 und 132, dazu eingerichtet sein, ein Zuordnungsverfahren durchzuführen, bei dem ein oder mehrere Peripheriegeräte 105 und ein Schweißgerät 102a-d einander zugeordnet werden.

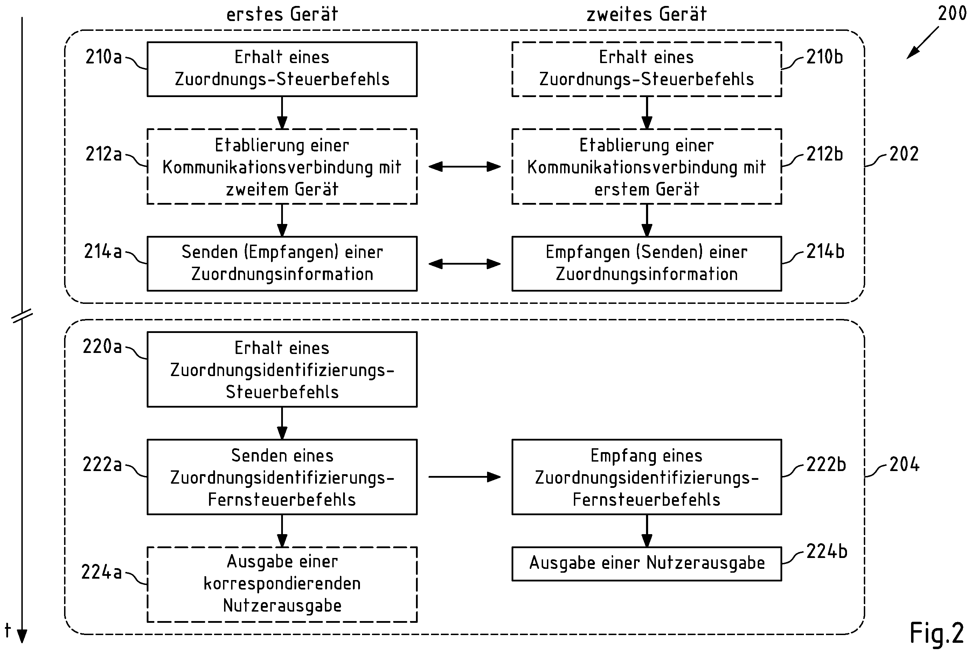

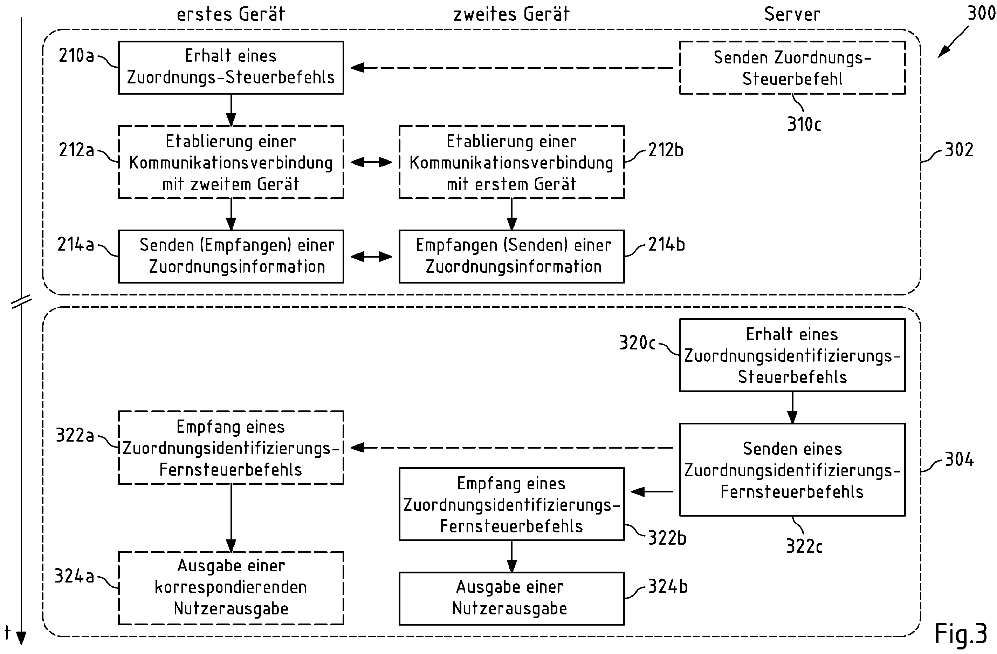

Im Folgenden werden Ausführungsbeispiele für ein Zuordnungsidentifizierungs-Verfahren und ein Zuordnungsverfahren anhand der Fig. 2 und 3 beschrieben.

Fig. 2 zeigt ein Flussdiagramm eines ersten Ausführungsbeispiels des Verfahrens.

Das Verfahren 200 umfasst ein Zuordnungsverfahren 202 und ein Zuordnungsidentifizierungs-Verfahren 204.

Bei dem Zuordnungsverfahren werden ein erstes Gerät und ein zweites Gerät, beispielsweise eines der Schweißgeräte 102a-d und eines der Peripheriegeräte 105, einander zugeordnet. Bei dem ersten Gerät kann es sich beispielsweise um das Schweißgerät 102c und bei dem zweiten Gerät um das Drahtvorschubgerät 106 oder um den Fernsteller 108c handeln. Es ist auch denkbar, dass es sich bei dem ersten Gerät um das Drahtvorschubgerät 106 oder um den Fernsteller 108c und bei dem zweiten Gerät um das Schweißgerät 102c handelt.

In einem ersten Schritt 210a des Zuordnungsverfahrens 202 wird am ersten Gerät ein Zuordnungs-Steuerbefehl über die Zuordnung des ersten und des zweiten Geräts zueinander erhalten. Der Zuordnungs-Steuerbefehl kann beispielsweise über eine entsprechende Nutzereingabe an einer Nutzerschnittstelle des ersten Geräts, beispielsweise die Nutzerschnittstelle 124 des Schweißgeräts 102c oder, wenn das Schweißgerät 102c das zweite Gerät ist, die Nutzerschnittstelle 126 des Drahtvorschubgeräts 106 bzw. des Fernstellers 108c, erhalten werden.

Die Steuereinrichtung des ersten Geräts wird durch den Erhalt des Zuordnungs-Steuerbefehls dazu veranlasst, im Schritt 212a eine Kommunikationsverbindung mit dem in dem Zuordnungs-Steuerbefehl identifizierten zweiten Gerät zu etablieren. Bei der Kommunikationsverbindung kann es sich insbesondere um eine Punkt-zu-Punkt-Verbindung, beispielsweise gemäß einem Bluetooth-Standard, handeln. Das zweite Gerät kann insbesondere an der Etablierung der Kommunikationsverbindung mitwirken (Schritt 212b). Weiterhin wird die Steuereinrichtung des ersten Geräts durch den Erhalt des Zuordnungs-Steuerbefehls dazu veranlasst, eine Zuordnungsinformation über die Zuordnung des ersten und zweiten Geräts zueinander an das zweite Gerät zu senden (Schritt 214a), die durch das zweite Gerät empfangen wird (Schritt 214b). Die Zuordnungsinformation wird vorzugsweise auf dem ersten und zweiten Gerät gespeichert.

Alternativ ist es auch denkbar, dass der Zuordnungs-Steuerbefehl über die Zuordnung des ersten und des zweiten Geräts zueinander am zweiten Gerät erhalten wird (Schritt 210b), woraufhin das zweite Gerät sodann im Schritt 212b die Kommunikationsverbindung zwischen dem ersten und zweiten Gerät etabliert, woran das erste Gerät mitwirken kann (Schritt 212a), und die Zuordnungsinformation über die Zuordnung des ersten und zweiten Geräts zueinander an das erste Gerät sendet (Schritt 214b), die durch das erste Gerät empfangen wird (Schritt 214a).

Das Senden und Empfangen der Zuordnungsinformation über die Zuordnung des ersten und zweiten Geräts zueinander (Schritte 214a-b) kann mit der Etablierung der Kommunikationsverbindung (Schritte 212a-b) zusammenfallen, insbesondere, wenn es sich bei der Kommunikationsverbindung um eine Punkt-zu-Punkt-Verbindung handelt. Ebenso kann der Erhalt des Zuordnungs-Steuerbefehls (Schritt 210a bzw. 210b) mit der Etablierung der Kommunikationsverbindung (Schritte 212a-b) zusammenfallen, beispielsweise wenn das erste und das zweite Gerät mittels einer kabelgebundenen Kommunikationsverbindung miteinander verbunden werden, zum Beispiel durch Anschließen des Schlauchpakets 110a-d eines Schweißbrenners 104a-d an ein Schweißgerät 102a-d bzw. ein Drahtvorschubgerät 106 oder durch Anschließen des Schlauchpakets 112 eines Drahtvorschubgeräts 106 an ein Schweißgerät 102c.

Weiterhin ist es denkbar, dass die Etablierung der Kommunikationsverbindung (Schritt 212a-b) entfällt, wenn die Kommunikationsverbindung zwischen dem ersten und zweiten Gerät bereits vor Erhalt des Zuordnungs-Steuerbefehls bestand, beispielsweise wenn verschiedene Schweißgeräte und Peripheriegeräte in ein gemeinsames Netzwerk, z.B. WLAN, eingebunden sind.

Zur Zuordnung mehrerer zweiter Geräte zum ersten Gerät, beispielsweise des Drahtvorschubgeräts 106 und des Fernstellers 108c zum Schweißgerät 102c, kann das Zuordnungsverfahren 202 beispielsweise mehrfach für ein jeweiliges dem ersten Gerät zuzuordnendes zweites Gerät durchgeführt werden.

Das Verfahren 200 umfasst weiter ein Zuordnungsidentifizierungs-Verfahren 204, das zu einem späteren Zeitpunkt durchgeführt werden kann.

Das Zuordnungsidentifizierungs-Verfahren 204 beginnt mit dem Erhalt eines Zuordnungsidentifizierungs-Steuerbefehls (Schritt 220a). Der Zuordnungsidentifizierungs-Steuerbefehl kann insbesondere am ersten Gerät erhalten werden, beispielsweise durch eine entsprechende Nutzereingabe an einer Nutzerschnittstelle des ersten Geräts, beispielsweise an der Nutzerschnittstelle 124 des Schweißgeräts 102c oder, wenn das Schweißgerät 102c das zweite Gerät ist, an der Nutzerschnittstelle 126 des Drahtvorschubgeräts 106 bzw. des Fernstellers 108c.

Der Erhalt des Zuordnungsidentifizierungs-Steuerbefehls, insbesondere über die Nutzereingabe, ist vorzugsweise zeitlich unabhängig von der vorigen Durchführung des Zuordnungsverfahrens 202 und kann zu einem beliebigen Zeitpunkt nach dem Zuordnungsverfahrens 202 erfolgen.

In Reaktion auf das Erhalten des Zuordnungsidentifizierungs-Steuerbefehls bewirkt das Schweißsystem eine Nutzerausgabe zur Identifizierung des dem ersten Gerät zugeordneten zweiten Geräts auf einer Nutzerschnittstelle des zweiten Geräts, beispielsweise eine Nutzerausgabe 142 an der Nutzerschnittstelle 126 des Drahtvorschubgeräts 106 bzw. des Fernstellers 108c oder, wenn das Schweißgerät 102c das zweite Gerät ist, eine Nutzerausgabe 140 an der Nutzerschnittstelle 124 des Schweißgeräts 102c. Das zweite Gerät wird von dem ersten Gerät insbesondere anhand der Zuordnungsinformation über die Zuordnung des ersten und zweiten Geräts zueinander identifiziert, die bei der vorigen Durchführung des Zuordnungsverfahrens 202 auf dem ersten Gerät gespeichert wurde.

Im vorliegenden Ausführungsbeispiel sendet das erste Gerät, gesteuert durch die Steuereinrichtung des ersten Geräts, zu diesem Zweck einen Zuordnungsidentifizierungs-Fernsteuerbefehl an das entsprechend der Zuordnungsinformation zugeordnete zweite Gerät (Schritt 222a). Das zweite Gerät empfängt den Zuordnungsidentifizierungs-Fernsteuerbefehl (Schritt 222b) und die Steuereinrichtung des zweiten Geräts bewirkt in Reaktion auf den Empfang des Zuordnungsidentifizierungs-Fernsteuerbefehls die Ausgabe einer Nutzerausgabe über die Nutzerschnittstelle des zweiten Geräts (Schritt 224b).

Bei der Nutzerausgabe kann es sich um eine zum Beispiel in einem Speicher des zweiten Geräts gespeicherte Nutzerausgabe handeln. Weiterhin ist es denkbar, dass das zweite Gerät eine von dem Zuordnungsidentifizierungs-Fernsteuerbefehls abhängige Nutzerausgabe ausgibt, beispielsweise aus einer Mehrzahl vorgegebener Nutzerausgaben auswählt.

Die Steuereinrichtung des ersten Geräts kann weiter optional die Ausgabe einer Nutzerausgabe, vorzugsweise einer zu der über die Nutzerschnittstelle des zweiten Geräts ausgegebene Nutzerausgabe korrespondierende Nutzerausgabe, über die Nutzerschnittstelle des ersten Geräts bewirken (Schritt 224a), beispielsweise eine zu der Nutzerausgabe 142 korrespondierende Nutzerausgabe 140 an der Nutzerschnittstelle 124 des Schweißgeräts 102c oder, wenn das Schweißgerät 102c das zweite Gerät ist, eine zu der Nutzerausgabe 140 korrespondierende Nutzerausgabe 142 an der Nutzerschnittstelle 126 des Drahtvorschubgeräts 106 bzw. des Fernstellers 108c. Dies erleichtert dem Nutzer, die Zuordnung des ersten und zweiten Geräts zueinander zu erkennen.

Bei der Nutzerausgabe 140 bzw. 142 kann es sich beispielsweise um ein Licht- und/oder Tonsignal handeln. Bei der Ausgabe zueinander korrespondierender Nutzerausgaben 140 und 142 kann es sich bei diesen zum Beispiel um Lichtsignale mit zueinander korrespondierenden Farben, um zueinander korrespondierende Blinksignale oder um zueinander korrespondierende Tonsignale handeln.

Ist das erste Gerät mehreren zweiten Geräten zugeordnet, beispielsweise das Schweißgerät 102c dem Drahtvorschubgerät 106 und dem Fernsteller 108c, so kann in Reaktion auf den Erhalt des Zuordnungsidentifizierungs-Steuerbefehls auch eine Nutzerausgabe auf den jeweiligen Nutzerschnittstellen der mehreren zweiten Geräte bewirkt werden. Dies erleichtert dem Nutzer die Identifizierung der zusammengehörigen Geräte.

Fig. 3 zeigt ein Flussdiagramm eines weiteren Ausführungsbeispiels des Verfahrens.

Das Verfahren 300 umfasst ebenfalls ein Zuordnungsverfahren 302 und ein Zuordnungsidentifizierungs-Verfahren 304.

Bei dem Zuordnungsverfahren 302 werden ein erstes Gerät und ein zweites Gerät, beispielsweise eines der Schweißgeräte 102a-d und eines der Peripheriegeräte 105, einander zugeordnet. Bei dem ersten Gerät kann es sich wiederum beispielsweise um das Schweißgerät 102c und bei dem zweiten Gerät um das Drahtvorschubgerät 106 bzw. den Fernsteller 108c handeln oder umgekehrt.

Das Zuordnungsverfahren 302 ähnelt dem Zuordnungsverfahren 202 aus Fig. 2; einander entsprechende Schritte sind mit gleichen Bezugszeichen versehen und es wird insoweit auf die obige Beschreibung in Fig. 2 verwiesen. Das Zuordnungsverfahren 302 unterscheidet sich vorliegend dadurch von dem Zuordnungsverfahren 202 aus Fig. 2, dass ein Server, beispielsweise die zentrale Steuereinrichtung 132, den Zuordnungs-Steuerbefehl an das erste Gerät sendet (Schritt 310c) und das Erhalten des Zuordnungs-Steuerbefehls am ersten Gerät (Schritt 210a) ein Empfangen des vom Server gesendeten Zuordnungs-Steuerbefehls umfasst. Weiterhin wird die Zuordnungsinformation über die Zuordnung des ersten und zweiten Geräts zueinander bei dem Zuordnungsverfahren 302 vorzugsweise auch auf dem Server gespeichert.

Das zu einem beliebigen späteren Zeitpunkt durchgeführte Zuordnungsidentifizierungs-Verfahren 304 beginnt mit dem Erhalt eines Zuordnungsidentifizierungs-Steuerbefehls, im vorliegenden Ausführungsbeispiel am Server (Schritt 320c). Der Zuordnungsidentifizierungs-Steuerbefehl kann beispielsweise durch eine entsprechende Nutzereingabe an einer Nutzerschnittstelle des Servers erfolgen.

Der Server sendet daraufhin auf Basis der bei Durchführung des Zuordnungsverfahrens 202 im Server hinterlegten Zuordnungsinformation über die Zuordnung des ersten und zweiten Geräts zueinander einen Zuordnungsidentifizierungs-Fernsteuerbefehl an das zweite Gerät und optional auch an das erste Gerät (Schritt 322c), so dass das zweite Gerät (Schritt 322b) und optional auch das erste Gerät (Schritt 322a) den Zuordnungsidentifizierungs-Fernsteuerbefehl empfangen. Die Steuereinrichtung des zweiten Geräts bewirkt sodann die Ausgabe einer Nutzerausgabe über die Nutzerschnittstelle des zweiten Geräts (Schritt 324b). Optional bewirkt weiter die Steuereinrichtung des ersten Geräts die Ausgabe einer korrespondierenden Nutzerausgabe über die Nutzerschnittstelle des ersten Geräts (Schritt 324a).

Auf diese Weise kann das Zuordnungsidentifizierungs-Verfahren auch zentral über den Server, zum Beispiel über die Steuereinrichtung 132, ausgelöst werden und der Nutzer kann die einander zugeordneten Geräte einfacher identifizieren.

## Patentansprüche

1. Verfahren (200, 204, 300, 304) zur Zuordnungsidentifizierung von Geräten (102a-d, 105) eines Schweißsystems (130a-d), ausgeführt mit ein oder mehreren Steuereinrichtungen (120, 122, 132) eines Schweißsystems,
- bei dem für ein erstes Gerät (102a-d; 105) eines Schweißsystems (130a-d) ein Zuordnungsidentifizierungs-Steuerbefehl erhalten wird (220a, 320c) und
- bei dem, in Reaktion auf das Erhalten (220a, 320c) des Zuordnungsidentifizierungs-Steuerbefehls, über eine Nutzerschnittstelle (126; 124) eines dem ersten Gerät (102a-d; 105) zugeordneten zweiten Geräts (105; 102a-d) des Schweißsystems (130a-d) eine Nutzerausgabe (142; 140) zur Identifizierung des dem ersten Gerät (120a-d; 150) zugeordneten zweiten Geräts (105; 102a-d) bewirkt wird (224b, 324b).

2. Verfahren nach Anspruch 1,
- bei dem das erste Gerät (102a-d; 105) und das zweite Gerät (105; 102a-d) zur Datenübermittlung, vorzugsweise Steuerbefehlsübermittlung, über eine Kommunikationsverbindung (113, 114), vorzugsweise drahtlose Kommunikationsverbindung (114), einander zugeordnet werden (202, 302) oder sind.

3. Verfahren nach Anspruch 1 oder 2,
**dadurch gekennzeichnet, dass** die Kommunikationsverbindung (113, 114) eine Punkt-zu-Punkt-Kommunikationsverbindung ist.

4. Verfahren nach einem der Ansprüche 1 bis 3,
**dadurch gekennzeichnet, dass** der Zuordnungsidentifizierungs-Steuerbefehl an dem ersten Gerät (102a-d; 105) erhalten wird (210a, 312a), insbesondere über eine Nutzerschnittstelle des ersten Geräts (102a-d; 105).

5. Verfahren nach einem der Ansprüche 1 bis 4,
**dadurch gekennzeichnet, dass** das Bewirken der Nutzerausgabe (142; 140) über die Nutzerschnittstelle (126; 124) des zweiten Geräts (105; 102a-d) in Reaktion auf das Erhalten (210a, 312a) des Zuordnungsidentifizierungs-Steuerbefehls umfasst:
- Übermitteln (222a-b), eines Zuordnungsidentifizierungs-Fernsteuerbefehls vom ersten Gerät (102a-d; 105) zum zweiten Gerät (105; 102a-d), vorzugsweise über die Kommunikationsverbindung (113, 114),
- Bewirken (224b) der Nutzerausgabe (142; 140) über die Nutzerschnittstelle (126; 124) des zweiten Geräts (105; 102a-d) in Reaktion auf das Erhalten (222b) des Zuordnungsidentifizierungs-Fernsteuerbefehls.

6. Verfahren nach einem der Ansprüche 1 bis 5,
**dadurch gekennzeichnet, dass** eines von dem ersten (102a-d; 105) und zweiten Gerät (105; 102a-d) zur Fernsteuerung des anderen von dem ersten (102a-d; 105) und zweiten Gerät (105; 102a-d) eingerichtet und dem anderen zu dessen Fernsteuerung zugeordnet ist.

7. Verfahren nach einem der Ansprüche 1 bis 6,
bei dem, in Reaktion auf das Erhalten (210, 310a, 312a) des Zuordnungsidentifizierungs-Steuerbefehls, eine Nutzerausgabe (142; 140), vorzugsweise eine zu der über die Nutzerschnittstelle (126; 124) des zweiten Geräts (105; 102a-d) bewirkten Nutzerausgabe (142; 140) korrespondierende Nutzerausgabe (140; 142), über eine Nutzerschnittstelle (124; 126) des ersten Geräts (102a-d; 105) bewirkt wird.

8. Verfahren nach Anspruch 7,
**dadurch gekennzeichnet, dass** die über die Nutzerschnittstelle (126; 124) des zweiten Geräts (105; 102a-d) bewirkte Nutzerausgabe (142; 140) und die über die Nutzerschnittstelle (124; 126) des ersten Geräts (102a-d; 105) bewirkte korrespondierende Nutzerausgabe (140; 142) Lichtsignale mit korrespondierenden Farben und/oder zeitlich und/oder räumlich korrespondierenden Leuchtmustern umfassen.

9. Verfahren nach einem der Ansprüche 1 bis 8,
**dadurch gekennzeichnet, dass**, in Reaktion auf das Erhalten (220a, 320a, 320b) des Zuordnungsidentifizierungs-Steuerbefehls, für mehrere dem ersten Gerät (102a-d; 105) zugeordnete zweite Geräte (105; 102a-d) des Schweißsystems (130a-d) über eine jeweilige Nutzerschnittstelle (126; 124) des jeweiligen zweiten Geräts (105; 102a-d) eine jeweilige Nutzerausgabe (142; 140) zur Identifizierung des dem ersten Gerät (102a-d; 105) zugeordneten jeweiligen zweiten Geräts (105; 102a-d) bewirkt wird (224b, 324b).

10. Verfahren nach einem der Ansprüche 1 bis 9,
weiter umfassend ein Zuordnungsverfahren, bei dem das erste (102a-d; 105) und das zweite Gerät (105; 102a-d) einander zugeordnet werden, insbesondere eine Zuordnungsinformation über die Zuordnung des ersten (102a-d; 105) und des zweiten Geräts (105; 102a-d) zueinander auf dem ersten (102a-d; 105) und/oder zweiten Gerät (105; 102a-d) gespeichert wird.

11. Schweißsystem (130a-d) mit einem ersten Gerät (102a-d; 105) und einem zweiten Gerät (105; 102a-d), wobei das Schweißsystem (130a-d) Mittel zur Durchführung eines Verfahrens nach einem der Ansprüche 1 bis 10 aufweist.

12. Schweißsystem (130a-d),
- mit einem ersten Gerät (102a-d; 105) und
- mit einem zweiten Gerät (105; 102a-d),
- wobei ein oder mehrere Steuereinrichtungen (120, 122, 132) vorgesehen sind, umfassend ein oder mehrere Mikroprozessoren und ein oder mehrere Speicher mit Befehlen, deren Ausführung auf den ein oder mehreren Mikroprozessoren die Durchführung eines Verfahrens nach einem der Ansprüche 1 bis 10 bewirkt.

13. Schweißsystem nach Anspruch 11 oder 12,
**dadurch gekennzeichnet, dass** eines von dem ersten (102a-d; 105) und dem zweiten Gerät (105; 102a-d) zur Fernsteuerung des anderen von dem ersten (102a-d; 105) und dem zweiten Gerät (105; 102a-d) eingerichtet ist.
